# EUROPEAN PATENT APPLICATION

(11) **EP 1 588 625 A1**
(43) Date of publication of application: **26.10.2005**
(21) Application number: 04008560.7
(22) Date of filing: 08.04.2004
(51) Int. Cl.: A23F 5/40, A23F 5/44, C12G 3/00

(54) **Water soluble beverage powder**

(71) Applicant: Symrise GmbH & Co. KG, 37603 Holzminden (DE); Mokate S.A., 43-450 Ustron (PL)
(72) Inventor: Barnekow, Rainer, 37696 Marienmünster (DE); Lukaszewicz, Ewa, 43-400 Cieszyn (PL); Tarnowski, Marek, 43-450 Ustròn (PL)
(74) Representative: Eisenführ, Speiser & Partner

(57) **Abstract**

Described is a water-soluble beverage powder comprising
a) a coffee component
b) alcohol-containing granules
c) a creamer, and
d) a sweetening agent.

Further described are corresponding food products, preparation processes and ready-to-drink coffee flavoured beverages.

## Description

The present invention relates to a food product, in particular to a water soluble beverage powder, useful for preparing an alcohol containing coffee drink intended to be dissolved in hot water. The present invention further relates to a process for making said food product and to a ready-to-drink beverage which can be made from said beverage powder by dissolving it in water.

There are known coffee compositions, for instance of the "cappuccino" type, which contain glucose syrup, sugar, instant coffee, vegetable fat, powder milk and stabilizer and sometimes flavors. There are also known cappuccino coffees enriched with added magnesium or other additives providing the coffee with a specific taste or supplementing diet with microelements, or slimming down agents. A hot "cappuccino"-type beverage is typically prepared by dissolving the instant "cappuccino"-type composition in a hot liquid such as hot water or hot milk.

It is known that alcohol-containing instant beverage mixtures may be produced by adsorption of alcohol-containing components to non-volatile components (DE 195 00 919). Fixing the alcohol to the surface by adsorption cannot ensure permanent encapsulation of the alcohol, which greatly restricts the handleability and leads to high alcohol losses in the unpackaged state. In particular, these powders are not free-flowing. The adsorbed alcohol containing solids are not alcohol-containing granules in the sense of the present invention.

The primary aim of this invention is to prepare a food product composition for a coffee drink which contains added alcohol, in dry form, in particular in the form of a water soluble beverage powder, which can be directly used after addition of hot water, typically with a temperature lower than 100°C.

A further objective of the present invention is to provide a corresponding ready-to-drink coffee flavored beverage with a low alcohol content which gives the consumer the impression of a significantly higher alcohol content.

According to the present invention there is provided a water soluble beverage powder (i.e., a food product) which comprises a coffee component, alcohol-containing granules, a creamer, a sweetening component, and, optionally, other minor ingredients such as (foam) stabilizers, emulsifiers, color, flavor, and the like.

It has been surprisingly found that the combination of certain water soluble components, namely a coffee component, alcohol-containing granules, a creamer and a sweetening agent to a water soluble beverage powder enhances the impression of alcohol in a synergistic manner on consumption of the ready-to-drink coffee flavored beverage which is obtained when the beverage powder is dissolved in water. Herein, alcohol means ethanol. I.e., surprisingly alcohol-containing granules can be used for producing a ready-to-drink coffee flavored beverage which (i) comprises an amount of alcohol but (ii) provides a taste sensation and/or physiological effects otherwise effected by beverages containing larger amounts of alcohol.

The sensory effects, in particular the taste impression, and physiological effects when the ready-to-drink coffee flavored beverage is consumed are unexpected. Although the ready-to-drink coffee flavored beverage produced with the soluble beverage powder according to the present invention contains typically less than 1 vol.% of alcohol, the consumer gets the impression of a 10 to 15 - fold higher content of alcohol in said ready-to-drink beverage. Typically about 18 - 25 g of soluble beverage powder according to the present invention (see below for preferred compositions) are mixed with 150 to 180 mL of hot (70 - 80°C) water.

Sensory tests regarding a ready-to-drink beverage with an alcohol content of 0.5 vol.% were performed by a panel of eight trained persons. Not only the alcoholic taste was enhanced, in addition physiological effects (e.g. rosy cheeks, slight tipsiness, improved mood) well known to accompany the consumption of beverages having an alcohol content of about 10 to 15 vol% were observed. This placebo-type effect is significant and surprising, since the low content of 0.5 vol% alcohol can not be responsible for the effects outlined.

In the ready-to-drink coffee flavored beverages of the present invention the effect of the alcohol provided by the alcohol-containing granules is synergistically enhanced by one or more of the other components originally present in the beverage powder of the present invention, i.e. the coffee component, the creamer and/or the sweetening component

The beverage powder of the present invention should be so formulated that it has good dissolution properties. "Dissolution" refers to the time from which an aqueous solution is placed in a receptacle containing a food product, preferably a soluble beverage powder, accompanied by stirring, until the stirring utensil no longer has residue on it. Preferably the components of the beverage powder of the present invention are such chosen that less than about 15 seconds is required for dissolution of 22 g of the soluble beverage powder, in a 200 mL cup of 170 mL of water at a temperature of about 77°C. More preferably the components are chosen in a way that the food product of the present invention (the soluble beverage powder) has a dissolution of less than about 10 seconds, more preferably less than about 7 seconds.

All percentages are by weight of total composition unless specifically stated otherwise.

The components of the food product (water-soluble beverage powder) of the present invention are now discussed in more detail:

### A) COFFEE COMPONENT:

The water soluble coffee component used may be of natural or synthetic origin. The water soluble coffee component used according to the present invention can be prepared by any convenient process. The water soluble coffee component preferably comprises instant coffee and/or coffee substitute (in powder form).

Conventionally, instant coffee (which can be used according to the present invention) is prepared by roasting and grinding a blend of coffee beans, extracting the roast and ground coffee with water to form an aqueous coffee extract, and drying the extract to form "instant coffee." Examples of instant coffees useful in the food product (water-soluble beverage powder) and process of the present invention, include but are not limited to those disclosed in U.S. Pat. No. 3,436,227; U.S. Pat. No. 3,620,756, and U.S. Pat. No. 3,652,293.

The instant coffee component (if present) can be any of the commercially available instant coffees sold on the market, or combinations thereof. These include spray dried instant coffee powders, agglomerates and freeze-dried particles. The coffee may be any single variety of coffee or a blend of different varieties. The coffee may be decaffeinated or undecaffeinated. The coffee may be processed to reflect a desired flavor characteristic such as expresso, French roast, or the like. Typical disclosures of spray drying processes which can be used to prepare instant coffee particles can be found, for example, in U.S. Pat. No. 2,771,343 or U.S. Pat. No. 2,750,998.

The coffee substitute (which can be used according to the present invention) may be of different origin, usually (roasted) plant parts are used. Typical ingredients of a coffee substitute for use according to the present invention are selected from the group consisting of: (roasted) cereal grains (like barley, wheat, rye), malt, (wheat) molasses, (wheat) bran, roasted carob, dandelion root, roasted chicory, figs, ginseng, soybean, and mixtures thereof.

A preferred food product, in particular a soluble beverage powder, of the present invention comprises from 2% to 20%, by weight of water soluble coffee component (e.g. instant coffee or coffee substitute); more preferably from 3% to 15%; more preferably still, from 4% to 12%.

A preferred food product, in particular a soluble beverage powder, of the present invention comprises from 0.5% to 15%, by weight of instant coffee; more preferably from 1% to 12%; more preferably still, from 2% to 10%.

A preferred food product, in particular a soluble beverage powder, of the present invention comprises from 0.5% to 15%, by weight of coffee substitute; more preferably from 1% to 10%; more preferably still; from 1% to 8%.

### B) ALCOHOL CONTAINING GRANULES:

A preferred food product, preferably the beverage powder, of the present invention comprises an amount of alcohol-containing granules so that the amount of alcohol in the product (beverage powder) is in the range of from 5-10% alcohol, preferably 6-9% alcohol.

The alcohol-containing granules used in the instant invention preferably comprise an edible solid organic polyol carrier containing alcohol. Edible solid organic polyol carriers are, for example, dextrins, maltodextrines, glucose, (modified) starches, starch breakdown products, dextrose. The alcohol-containing granules used in the present invention preferably are (micro)capsules.

Preferred alcohol-containing granules (comprising edible solid organic polyol carriers or not, being micro-capsules or not) have an alcohol content of 5 to 40, preferably 10 to 35, more preferably 20 to 30, % by weight.

Preferred alcohol-containing granules have particle diameters in the range of 0.1 to 1.5, more preferably 0.2 to 1 mm, more preferably 0.2 to 0.6 mm.

Suitable alcohol-containing granules can be obtained by well-known processes like spray-drying, melt extrusion, rotating drum or fluidized-bed spray granulation, fluidized-bed spray granulation being preferred for preparing granules for use in the present invention.

It is known that alcohol-containing powders having a high alcohol content and high alcohol yield can be produced (U.S. Pat. No. 4,454,165) by spray-drying hydrolyzed starch.

Preferred alcohol-containing granules are obtainable by fluidized-bed spray granulation, e.g. granules as described in U.S. Pat. No. 5,961,707.

The preferred process for the manufacturing of alcohol-containing granules according to U.S. Pat. No. 5,961,707 is a process for the preparation of alcohol-containing granules by fluidized-bed spray granulation of a solution of dextrins in a water/alcohol mixture. By this process very high yields of encapsulated alcohol, based on the alcohol used, may be achieved. The thus obtainable granules have a high alcohol content, with effective alcohol encapsulation and good flowability.

The term "dextrins" is taken to mean starch, waxy starch, modified starch, modified waxy starch, preferably starch breakdown products, in particular cold-water-soluble starch breakdown products. "Modified starch" is taken to mean starches and starch breakdown products which are altered by chemical derivatization, principally esterification or etherification. "Starch breakdown products" for the purposes of the invention primarily include products obtainable by acid-catalyzed hydrolytic breakdown or by enzymatic breakdown; the enzymatic breakdown, as is known, can be performed with the use, for example, of amylases, glucoamylases or pullulanases. Preferred dextrins include starch breakdown products having a content of G₁ - G₂ saccharides of greater than 10% by weight and of G₁ - G₈ saccharides of less than 50% by weight. Particularly preferred dextrins are pregelatinized (cold-water-soluble) starches.

In particular, preference is given to dextrins which are soluble at a concentration of at least 40, preferably at least 50, in particular at least 60, % by weight in water at 25°C.

Mixtures of the dextrins described and cellulose or cellulose derivatives can also be used. Preferred mixtures comprise 50 to 99% by weight of hydrolyzed starch containing more than 10% by weight of saccharides of a degree of polymerization of glucose of up to 2, and 1 to 50% by weight of simple or modified starch, polysaccharides, cellulose, cellulose derivatives and/or gelatin.

Solutions to be used for the granulation process preferably comprise 20 to 70, more preferably 35 to 55,% by weight of dextrins, 10 to 40, preferably 20 to 35, % by weight of water, 10 to 40, preferably 20 to 35, % by weight of alcohol and, if appropriate 20% by weight of other components, such as wine dry matter. The term "solution" for the purposes of the invention also includes non-true solutions and dispersions.

The viscosity of the solutions to be used for the preferred fluidised-bed spray-granulation process depends on the necessity of the mechanical atomization provided for the process; it is generally 100 to 200, preferably 140 to 170, mPas/30°C and a shear rate of 981 l/min.

In the preferred process, the solutions are spray-granulated in a fluidized bed with constant agitation. In the course of the fluidized-bed spray granulation, particles situated in a fluidized bed which are substantially smaller than the granules to be produced are sprayed with an atomizable starting material and dried until the particles have reached the desired particle size.

The preferred process for the manufacturing of alcohol-containing granules is the process according to U.S. Pat. No. 5,961,707, which refers to a process for the fluidized-bed spray granulation and a device for this process as disclosed in EP-A 163 836 (U.S. Pat. No. 4,946,654). A device of this type essentially consists of a fluidized-bed granulator which contains apparatuses for spraying the product fed in a sprayable form, which, in addition, contains a system suitable for recycling fine fractions escaping from the fluidized bed and to the gas-distributor plate of which, one or more counter-current gravity classifiers are directly attached.

Granules having a narrow particle size distribution are preferred in the beverage powder of the present invention and may be produced by
a) spraying the product to be granulated in liquid form into a fluidized bed,
b) separating off the fine fractions escaping from the fluidized bed together with the exhaust gas and recycling them to the fluidized bed as seeds for granule formation,
c) solely by setting the classifying gas flow rate, influencing the granulation process in the fluidized bed in such a manner that granules are formed in the size preset by the classifying gas flow rate, and
d) taking off the finished granules alone via one or more counter-current gravity classifiers inserted into the gas-distributor plate of the fluidized-bed apparatus and
e) if appropriate, subjecting the granules thus obtained to a thermal aftertreatment.

Advantageously, the process can be carried out in such a manner that the granule formation process, in the interaction between granule growth and seed formation, is inherently linked to the discharged granule size predetermined by the classifying gas feed. In this case, the size of the granules can be set via the classifying discharge.

Embodiments of the preferred process are, for example, described in EP 332 031 (U.S. Pat. No. 4,931,174) and EP 332 929 (U.S. Pat. No. 5,213,820). In principle, the process can also be carried out using standard granulators continuously or batchwise.

The classification can equally be performed separately and downstream using screens or other classifiers. Seed material can be produced by grinding.

The preferred granulation process is generally carried out as follows: Firstly, the dextrin is dissolved in water. The alcohol is then added to the aqueous dextrin solution, homogenization of the solution by intensive mechanical mixing having proved to be useful. The alcohol content of the solution has an upper limit due to the alcohol-soluble critical concentration. The solution is spray-granulated in a fluidized bed (with constant agitation).

With appropriate choice of parameters, the granules forming, owing to the shell-like growth, are very compact, microporous and of uniform shape, so that they satisfy the highest requirements of abrasion resistance of granules. However, granules of high porosity can also be produced by suitable agglomeration conditions (low binder content), if agglomerates having rapid dispersion behaviour are preferred.

The preferred alcohol-containing granules thus obtained have a spherical shape and an alcohol content of 5 to 40, preferably 10 to 35, more preferably 20 to 30, % by weight and particle diameters of 0.1 to 1.5, more preferably 0.2 to 1 mm, more preferably 0.2 to 0.6 mm. The width of the particle diameter distribution (90% of the weight) is generally about 400, preferably about 200 µm, based on the maximum of the (weight) distribution curve.

In addition to alcohol and carrier material (e.g. dextrin, starch), natural and nature-identical flavourings may also be incorporated into the alcohol-containing granules, in which case the flavour content preferably is from 2 to 30%, preferably 5 to 20%, based on the finished alcohol-containing granules.

If desired, the alcohol-containing granules used in the beverage powder of the present invention are coated with a support material, which further improves the alcohol encapsulation quality and also the flowability and abrasion resistance. Suitable coating materials are simple and modified starches, gelatin, cellulose and cellulose derivatives, lactose, fats, waxes and the like. The proportion of the coating material (if present) is preferably 5 to 70, more preferably 5 to 30, % by weight, based on the uncoated granules.

It is also possible to incorporate coffee flavor (e.g. coffee extract) or parts or all of the coffee component (a) together with the alcohol into the alcohol-containing granules.

### C) CREAMER:

"Creamer" refers to a creamer or creamers useful in the food product, preferably a soluble beverage powder, and process of the present invention.

The creamer may be of the foaming or non-foaming type, and may be any combination of these types. The creamer may also be or include a non-dairy creamer. For example, the creamer may be made up of non-foaming dairy creamer together with a foaming dairy creamer. The expression "dairy creamer" as used herein means a creamer which contains whole milk solids or whole milk solids having a reduced content of milk fat. The expression "non-dairy creamer" as used herein means a creamer which contains no appreciable quantity of milk-derived ingredients.

Creamers include, but are not limited to, non-dairy creamers, synthetic and imitation dairy products, non-fat and whole milk solids. Preferred creamer include, non-dairy creamers made from vegetable fats, sugar, emulsifier, carbohydrates, sodium caseinate, and buffers. The creamer base may further include thickening agents such as modified food starches and/or natural and synthetic gums such as xanthan, cellulose gel, carrageenan and sodium carboxymethylcellulose. Creamers suitable for use in the food product, preferably a soluble beverage powder, and process of the present invention include those synthetic and imitation dairy products disclosed in KIRK OTHMER ENCYCLOPEDIA OF CHEMICAL TECHNOLOGY, W. J. Harper, Willey Interscience, 3rd edition, Vol. 22, section entitled "Synthetic and Imitation Dairy Products", pp. 465-498, (1978).

Preferably, the food product, in particular the water-soluble beverage powder, of the present invention comprises from 10% to 40%, by weight of creamer; more preferably from 15% to 30%; more preferably still, from 17% to 25%.

Preferably the creamer comprises glucose syrup and vegetable fat.

Preferably, the food product, in particular the water-soluble beverage powder, of the present invention comprises from 8% to 25%, by weight of glucose syrup; more preferably from 10% to 20%; more preferably still, from 12% to 18%.

Preferably, the food product, in particular the water-soluble beverage powder, of the present invention comprises from 3% to 15%, by weight of vegetable fat; more preferably from 4% to 12%; more preferably still, from 5% to 10%.

Conventional foaming creamers which can be used according to the present invention are disclosed in U.S. Pat. No. 4,438,147, U.S. Pat. No. 4,746,527 or U.S. Pat. No. 4,748,040. EP 885 566 describes a soluble beverage creamer which comprises about 15% to about 30% by weight of non-fat milk solids, sweet whey and a lipid component. A foaming dairy creamer which does not require incorporation of a gas in disclosed in U.S. Pat. No. 5,721,003.

An example of a milk substitute for use in coffee comprises glucose syrup, emulsified solid vegetable fat, lactic matter (lactose). Another example of milk substitute for use in coffee consists of 55% glucose syrup, 22% emulsified solid vegetable fat, 18% skimmed milk powder, 3% water and 2% stabiliser (E-340). Another example of milk substitute for coffee consists of 55% carbohydrates, 34% solid hydrogenated coconut fat, 6% sodium caseinate, emulsifier (E-471), stabiliser (E-340), anti-caking agent (E-341) and colorant.

Another, preferred, example of milk substitute for coffee consists of 34% glucose syrup, 35% skimmed milk powder, 26% emulsified solid vegetable fat, 3% water and 2% stabiliser (E-340).

### D) SWEETENING AGENT

Examples of suitable sweetening agent are sugar, glucose syrup, corn syrup, sucrose, dextrose, fructose, glucose, maltodextrin, and the like, and mixtures of these sweetening agents. In any event, the particular sweetening agent or combination of sweetening agents selected is not critical; the primary determining factors being the desired taste, sweetness and bulk.

Preferred sweetening agents comprise at least one sweetening agent selected from the group consisting of sugar and glucose.

The amount of sweetening agent used in the food products of the present invention will vary depending upon the sweetening agents, the desired level of sweetness and the strength of the sweetening agent; but preferably comprises 40% to 80%, more preferably 55 to 70% by weight of the food product, in particular the soluble beverage powder.

Preferably, the food product, in particular the soluble beverage powder, of the present invention comprises from 20% to 50%, by weight of sugar; more preferably from 30% to 45%; more preferably still, from 32% to 40%.

Preferably, the food product, in particular the soluble beverage powder, of the present invention comprises from 15% to 35%, by weight of glucose; more preferably from 20% to 30%; more preferably still, from 22% to 28%.

The sweetening agent may also contain artificial sweeteners such as saccharin, cyclamates, acetosulfame, L-aspartyl based sweeteners such as aspartame, and mixtures of these. If an artificial sweetener is used, it is suitably combined with bulking agents such as maltodextrins and polydextrose. In this case, the total amount of sweetener and bulking agent is usually in the range of about 30 to about 70% by weight; the amount of artificial sweetener itself usually being less than 1% by weight.

### OPTIONAL COMPONENTS

If desired, the food product, in particular the soluble beverage powder, may also contain one or more emulsifiers. Suitable emulsifiers may be selected from monoglycerides, distilled monoglycerides, diglycerides, glycerol monostearates, sorbitol monostearates, esters or carbocyclic acids with mono- and di-glycerides, monosodium phosphate derivatives of mono- and di-glycerides, lecithin, diacetyl tartaric acid esters of mono-diglycerides, sorbitan esters, diacetyl tartaric acids esters of mono- and di-glycerides, succinylated mono- and di-glycerides, acetylated mono- and di-glycerides, hydroxylated lecithin, propylene glycol mono-and di-esters of fatty acids, polyglycerol esters of fatty acids, lactylic esters of fatty acids, and mixtures thereof.

The food product (in particular the beverage powder) of the present invention may contain the emulsifier(s) in an amount in the range of 0.2% to 2%, preferably 0.4% to 1.5% by weight of the food product, in particular a soluble beverage powder.

A preferred emulsifier is E-471 (mono- and di-glycerides of fatty acids).

The food product of the present invention may also contain one or more suitable stabilisers; for example dipotassium phosphate (E-340 (ii)) or sodium citrate. If stabilisers are used, the amount of stabilisers used may be in the range of 0.1 % to 1%, preferably 0.2% to 0.8% by weight of the food product, in particular a soluble beverage powder.

A foam stabiliser can also be incorporated in an amount sufficient to reduce foam loss as a function of time. Preferred foam stabilisers are sodium caseinate, emulsifiers (see above), and hydrocolloids, either alone or in combination.

Suitable additives like flavouring agents, colouring agents, anti-caking agents, flowing agents, antioxidants, and the like may also be included in the food product (preferably the beverage powder) of the present invention as desired. A suitable flowing agent is sodium silica aluminate. A preferred colouring agent is beta-carotene. A preferred anti-caking agent is E-341 (calcium phosphate). Gum arabic may be added (e.g. as hydrocolloid emulsifier, texturizer, foam stabiliser or film fomer).

Any food grade thickening agent can be used in the food product of the present invention, preferably the soluble beverage powder, provided that it is compatible with the other essential ingredients therein. Suitable thickening agents include, but are not limited to, cellulose gel, carrageenan, cellulose derivatives, hydrocolloids, microencapsulated cellulose, sodium carboxymethylcellulose (CMC), various food starches (modified and unmodified) and xanthan. Selection of the thickening agent will be determined primarily by mouthfeel characteristics, cost and efficiency in producing the desired thickening enhancing characteristics. Other factors include rehydration in the finished beverage, cup appearance, and ability to suspend particulates (e.g. cocoa solids). CMC may be preferred from a mouthfeel and flavor display standpoint.

Flavoring agents useful in the food product, preferably the soluble beverage powder, of the present invention include any one of the commercially available flavorings. Preferably, such flavoring agents are encapsulated (including spraydried, extrudated, granulated) or liquid flavorings. The flavoring agents may be natural or artificial in origin. Preferred flavoring agents include, but are not limited to, Almond Nut, Amaraetto, Anisette, Brandy, Cappuccino Chocolate, Chocolate Mint, Cinnamon, Cinnamon Almond, Creme de Menthe, Grand Mariner, Irish Creme, Kahlua, Macadamia Nut, Orange, Orange Leaf, Peppermint Stick, Pistachio, Raspberry, Sambuca, and Vanilla bean. Actual levels of flavoring added will depend upon the strength of flavor desired. Such levels are readily determined by one skilled in the art. Preferably, the food product, preferably a soluble beverage powder, of the present invention comprises from 0.01% to 5%, by weight of flavoring agent(s); more preferably from 0.05% to 2%; more preferably still, from 0.1 % to 1 %.

"Comprising" means that other steps and other ingredients which do not affect the end result can be added to the process and/or resulting flavored instant coffee product of the instant invention. Accordingly, this term encompasses the terms "consisting of" and "consisting essentially of".

A particularly preferred embodiment of the present invention relates to a food product containing sugar, glucose, glucose syrup, instant coffee, coffee substitute, vegetable fat, milk protein, stabilizer and emulsifier and flavors, is characterized in that it contains from 34 to 38 wt.% sugar, from 23 to 26 wt.% glucose, from 13 to 16 wt.%, glucose syrup, from 6 to 7 wt.% alcohol, from 2 to 4 wt.% instant coffee, from 4 to 6 wt.% coffee substitute, from 6 to 8 wt. % vegetable fat, from 0.5 to 1 wt.% milk protein, from 0.4 to 0.5 wt.% E-340 (ii) stabiliser, from 0.5 to 1 wt. % E-471 emulsifier and from 0.1 to 0.3 wt.% flavor and color agents.

Another particularly preferred embodiment of the present invention relates to a food product containing sugar, glucose, glucose syrup, alcohol, instant coffee, coffee substitute, vegetable fat, milk protein, stabilizer and emulsifier and flavors, is characterized in that it contains from 32 to 38 wt.% sugar, from 23 to 26 wt.% glucose, from 13 to 16 wt.%, glucose syrup, from 6 to 9 wt.% alcohol, from 4 to 10 wt.% instant coffee, from 1 to 5 wt.% coffee substitute, from 6 to 9 wt. % vegetable fat, from 0.5 to 1 wt.% milk protein, from 0.4 to 0.5 wt.% E-340 (ii) stabiliser, from 0.5 to 1 wt. % E-471 emulsifier and from 0.1 to 0.3 wt.% flavor and color agents.

Further aspects of the present invention are stated in the appending claims and the following examples.

### EXAMPLES

The hydrolyzed starch characterized in Table 1 was used in the following examples.

**TABLE 1**

| Composition of the hydrolyzed starch used (figures in % by weight) Degree of polymerization of glucose | | | | | | | | | |
|---|---|---|---|---|---|---|---|---|---|
| Type | G₁ | G₂ | G₃ | G₄ | G₅ | G₆ | G₇ | G₈ | G₉₋ₙ |
| B | 10.0 | 5.2 | 7.9 | 6.1 | 6.5 | 7.5 | 5.8 | 3.6 | 47.4 |

The symbol G signifies the glucose and the index signifies the degree of polymerization. The alcohol content of the granules is specified in the present invention in % by weight; the alcohol yield specifies the percentage proportion of the alcohol remaining in the granules, based on the amount of alcohol used in the solution employed. The alcohol content was determined by gas chromatography and the water content was determined by Karl-Fischer titration.

### Example 1

In a granulation apparatus of the type shown in European Patent Specification 332 031 and EP-A 163 836 and having the following features (diameter of the gas-distributor plate: 225 mm, atomizing nozzle: two-component nozzle, classifying discharge: zig-zag classifier, filter: internal bag filter) a solution consisting of 25% by weight of water, 25% by weight of ethanol and 50% of hydrolyzed starch (B as in Table 1) is granulated. The solution is sprayed at a temperature of 30°C. into the fluidized-bed granulator. To fluidize the bed contents, nitrogen is blown in at a rate of 110 kg/h. The inlet temperture of the fluidizing gas is 105°C.

The temperature of the exhaust gas is 58°C. The classifying gas fed is likewise nitrogen, at a rate of 10 kg/h at a temperature of 30°C. The contents of the fluidized bed are 800 g. The granulation rate is 3 kg per hour. Free-flowing granules having a mean particle diameter of 300 µm are obtained. The mean composition of the granules is: 23.1% ethanol, 3% water, balance starch. This corresponds to an alcohol yield of 87%.

### Example 2

In the apparatus described in Example 1, a solution consisting of 23.5% water, 30% natural whiskey flavouring (containing approximately 79% alcohol) and 46.5% hydrolyzed starch (B as in Table 1) is granulated. The solution is sprayed at a temperature of 35°C. into the fluidized-bed granulator. To fluidize the bed contents, nitrogen is blown in at a rate of 110 kg/h. The inlet temperature of the fluidizing gas is 105°C. The temperature of the exhaust gas is 52°C. The classifying gas fed is likewise nitrogen at a rate of 8.5 kg/h and a temperature of 52°C. The contents of the fluidized bed are 200 g. The granulation rate is 3.5 kg per hour. Free-flowing granules having a mean particle diameter of 400 µm are obtained. The mean alcohol content of the granules is 26.7% ethanol. This corresponds to an alcohol yield of 81%.

### Example 3

In a spray tower, a spray solution which has the same composition as in Example 1 is dried at a feed air temperature of 180°C. and an exhaust air temperature of 75°C. The resulting granules contained 17% alcohol.

### Example 4

In the apparatus described in Example 1, a solution consisting of 23.5% water, 30% flavouring (containing approximately 70% alcohol and 30% aqueous coffee extract) and 46.5% hydrolyzed starch (B as in Table 1) is granulated. The solution is sprayed at a temperature of 35°C. into the fluidized-bed granulator. To fluidize the bed contents, nitrogen is blown in at a rate of 110 kg/h. The inlet temperature of the fluidizing gas is 105°C. The temperature of the exhaust gas is 52°C. The classifying gas fed is likewise nitrogen at a rate of 8.5 kg/h and a temperature of 52°C. The contents of the fluidized bed are 200 g. The granulation rate is 3.5 kg per hour. Free-flowing granules having a mean particle diameter of 400 µm are obtained. The mean alcohol content of the granules is 26.7% ethanol. This corresponds to an alcohol yield of 81 %.

### Application examples:

### Example A

A food product, in particular a soluble beverage powder, was produced by mixing a coffee component, alcohol-containing granules, a creamer and a sweetening agent. The amount of alcohol-containing granules was 32% by weight based on the total food product. The alcohol-containing granules according to example 1 and had an alcohol content of about 23% by weight, the granules had a mean particle diameter of about 300 µm.

The overall compositions was as follows: the food product contains 35 wt.% sugar, 26 wt.% glucose, 13 wt.%, glucose syrup, 6 wt. % alcohol, 6 wt.% coffee substitute, 4 wt.% instant coffee, 8 wt.% vegetable fat, 0.8 wt. % milk protein, 0.4 wt. % E-340 (ii) stabilizer, 0.5 wt.% E-471 emulsifier and 0.3 wt.% flavor, color agents.

### Example B

20 g of the food product according to Example A was dissolved in 170 mL hot (80°C) water to give a ready-to-drink coffee beverage.

The ready-to-drink coffee beverage prepared from the food product according to the invention, contained from 2.0 to 2.5 vol.% sugar, from 1.5 to 1.8 vol.% glucose, from 0.8 to 1.0 vol.%, glucose syrup, from 0.3 to 0.45 vol.% alcohol, from 0.4 to 0.45 vol.% vegetable fat, from 0.2 to 0.35 vol.% coffee substitute, from 0.1 to 0.2 vol.% instant coffee, from 0.02 to 0.03 vol.% milk protein, from 0.01 to 0.02 vol.% E-340 (ii) stabilizer, and from 0.002 to 0.003 vol.% flavor, color agents.

The sensory effects, in particular the taste impression, and physiological effects when this ready-to-drink coffee flavored beverage is consumed are unexpected. Although the ready-to-drink coffee flavored beverage contains less than 0.5 vol.% of alcohol, the expert sensory panel found a significant, synergistic, increase of alcohol content in said ready-to-drink coffee. The sensory tests were performed by a panel of eight trained persons. Not only the alcoholic taste was enhanced, in addition physiological effects (e.g. rosy cheeks, slight tipsiness, improved mood) well known to accompany the consumption of beverages having an alcohol content of about 10 vol% were observed.

## Claims

1. A water-soluble beverage powder comprising
a) a coffee component
b) alcohol-containing granules
c) a creamer, and
d) a sweetening agent.

2. A water soluble beverage powder according to claim 1 wherein the coffee powder is instant coffee and/or coffee substitute.

3. A water soluble beverage powder according to to claim 1 or claim 2 wherein the alcohol-containing granules have an alcohol-content of 2 to 40% by weight.

4. A water soluble beverage powder according to any of the claims 1 to 3 wherein the creamer comprises glucose syrup and vegetable fat.

5. A water soluble beverage powder according to any of the claims 1 to 4 wherein the sweetening agent is sugar and/or glucose

6. Food product containing sugar, glucose, glucose syrup, alcohol, instant coffee, coffee substitute, vegetable fat, milk protein, stabilizer and emulsifier and flavors, **characterized in that** it contains from 34 to 38 wt.% sugar, from 23 to 26 wt.% glucose, from 13 to 16 wt.%, glucose syrup, from 6 to 7 wt.% alcohol, from 2 to 4 wt% instant coffee, from 4 to 6 wt.% coffee substitute, from 6 to 8 wt.% vegetable fat, from 0.5 to 1 wt.% milk protein, from 0.4 to 0.5 wt.% E-340 (ii) stabilizer, from 0.5 to 1 wt.% E-471 emulsifier and from 0.1 to 0.3 wt.% flavor and color agents.

7. Food product containing sugar, glucose, glucose syrup, alcohol, instant coffee, coffee substitute, vegetable fat, milk protein, stabilizer and emulsifier and flavors, **characterized in that** it contains from 32 to 38 wt.% sugar, from 23 to 26 wt.% glucose, from 13 to 16 wt.%, glucose syrup, from 6 to 9 wt.% alcohol, from 4 to 10 wt.% instant coffee, from 1 to 5 wt.% coffee substitute, from 6 to 9 wt. % vegetable fat, from 0.5 to 1 wt.% milk protein, from 0.4 to 0.5 wt.% E-340 (ii) stabiliser, from 0.5 to 1 wt. % E-471 emulsifier and from 0.1 to 0.3 wt.% flavor and color agents.

8. A process for the preparation of (i) a water soluble beverage powder according to any of claims 1-5 or (ii) a food product according to any of claims 6-7 comprising the step of mixing
a) a coffee component,
b) alcohol-containing granules,
c) a creamer,
d) a sweetening agent.

9. Ready-to-drink coffee flavored beverage which can be obtained by dissolving (i) a water soluble beverage powder according to any of claims 1-5 or (ii) a food product according to any of claims 6-7 in water.

10. Ready-to-drink coffee flavored beverage according to claim 9, wherein the concentration of alcohol is less than 1 vol.%.

11. Use of alcohol-containing granules for producing a ready-to-drink coffee flavored beverage which (i) comprises an amount of alcohol and (ii) provides a taste sensation and/or physiological effects otherwise effected by beverages containing larger amounts of alcohol.
